**Europäisches Patentamt**

**European Patent Office**

**Office européen des brevets**

(11) Veröffentlichungsnummer: **0 300 231 B1**

(12) **EUROPÄISCHE PATENTSCHRIFT**

(45) Veröffentlichungstag der Patentschrift: **11.03.92**

(21) Anmeldenummer: **88110238.8**

(22) Anmeldetag: **27.06.88**

(51) Int. Cl.⁵: **F16J 15/10,** F16J 15/12, F16L 23/00, F16L 58/18

(54) **Flanschdichtung.**

(30) Priorität: **24.07.87 DE 3724486**

(43) Veröffentlichungstag der Anmeldung:
**25.01.89 Patentblatt 89/04**

(45) Bekanntmachung des Hinweises auf die
Patenterteilung:
**11.03.92 Patentblatt 92/11**

(84) Benannte Vertragsstaaten:
**BE DE ES FR IT LU NL**

(56) Entgegenhaltungen:
**DE-C- 2 919 958**
**DE-U- 1 750 255**
**DE-U- 1 841 216**
**DE-U- 8 710 137**
**US-A- 3 151 869**

(73) Patentinhaber: **KROLL & ZILLER KOMMANDIT-GESELLSCHAFT**
**Hofstrasse 56-60**
**W-4010 Hilden(DE)**

(72) Erfinder: **Ziller, Thomas, Dipl.-Ing.**
**Steinhof 20**
**W-4006 Erkrath 1(DE)**

(74) Vertreter: **Patentanwälte Dipl.-Ing. Alex Stenger Dipl.-Ing. Wolfram Watzke Dipl.-Ing. Heinz J. Ring**
**Kaiser-Friedrich-Ring 70**
**W-4000 Düsseldorf 11(DE)**

EP 0 300 231 B1

## Beschreibung

Die Erfindung betrifft eine Flanschverbindung für Rohrleitungen mit einer zwischen den Rohrleitungen angeordneten Flanschdichtung bestehend aus einer armierungsfreien Verdickung, insbesondere einem O-Ring, an deren Außenseite eine mit einer Armierung versehene sowie mit balligen Oberflächen ausgebildete Ringscheibe angesetzt ist, wobei die Verdickung im unbelasteten Zustand gegenüber der Dicke der Ringscheibe ein Übermaß besitzt.

Aus der DE-C-2 919 958 ist eine derartige Flanschverbindung für Rohrleitungen bekannt, die eine zwischen den Rohrleitungen angeordnete Flanschdichtung aufweist. Diese besteht aus einer armierten Ringscheibe mit balligen Oberflächen, an deren Innenseite ein O-Ring einteilig angeformt ist, der selbst keine Armierung aufweist. In unbelasteten Zustand vor dem Einbau der Flanschdichtung besitzt der O-Ring gegenüber der armierten Ringscheibe ein Übermaß. Aus dem Zusammenspiel von O-Ring und armierter Ringscheibe mit den balligen Oberflächen resultiert eine Zunahme der Dichtwirkung bei höheren Betriebsdrücken, ohne daß dazu die Vorspannkraft ebenfalls erhöht werden müßte.

Insbesondere für die chemische und artverwandte Industrie werden im Rohrleitungs- und Apparatebau in zunehmendem Maße Bauteile, beispielsweise Rohre, mit Auskleidungen eingesetzt, die an den Innenseiten sowie an den Flanschflächen angebracht sind. Wird die bekannte Dichtung bei solchen Flanschverbindungen bis zum Innendurchmesser des Rohres geführt, kommt es im allgemeinen zu einen Abdrücken (Ausbeulen) der Innenkante der Auskleidung. Hinzu kommt, daß die Flanschteile auch Temperatureinflüssen ausgesetzt sind, die die bereits bestehenden Schwierigkeiten bei der Abdichtung noch vergrößern. Schließlich entstehen bei der bekannten Flanschverbindung im Bereich des Ringspaltes des Dichtspaltes Wirbelbildungen, die bei abrasiven Produkten zu zerstörenden Auswaschungen führen können.

Aus der US-A-3 151 869 ist eine Flanschverbindung für Rohrleitungen bekannt, die mit einer gleichmäßigen Glasauskleidung versehen sind. Die Glasauskleidung erstreckt sich dabei bei der jeweiligen Rohrleitung ausgehend von der Innenwand um einen Bogen herum bis hin zu der dazu senkrechten, ringförmigen Flanschfläche. Die Flanschdichtung besteht aus einer Ringscheibe mit zueinander parallelen Oberflächen, die zur Innenseite hin mit drei konzentrischen Rippen auf jeder der beiden Seiten versehen sind, wobei diese Rippen einen rechteckigen Querschnitt aufweisen. An der Innenseite der äußeren Ringscheibe ist eine zweite Ringscheibe angeformt, deren Dicke kleiner ist als die Dicke der äußeren Ringscheibe und die ebenfalls zueinander parallele Oberseiten aufweisen. Diese innere Ringscheibe soll durch einen Minimalen Flachendruck eine Beschädigung der Glasauskleidung im Bogenbereich der Rohrleitungen verhindern. Nachteilig bei dieser bekannten Flanschverbindung ist, daß aufgrund der Konstruktion der äußeren Ringscheibe mit den konzentrischen Rippen eine optimale Abdichtung insbesondere bei höheren Betriebsdrücken nicht möglich ist, da hierzu die Vorspannkraft ebenfalls erhöht werden muß. Darüber hinaus entstehen im Bogenbereich der Glasauskleidungen Wirbelbildungen, die bei abrasiven Produkten zu zerstörenden Auswaschungen führen.

Ausgehend von einer Flanschverbindung für Rohrleitungen der eingangs angegebenen Art liegt der Erfindung die **Aufgabe** zugrunde, eine verbesserte Flanschverbindung zu schaffen.

Als technische **Lösung** wird mit der Erfindung vorgeschlagen, daß die Rohrleitungen jeweils mit einer an sich bekannten Auskleidung versehen sind, wobei die Auskleidung im Bereich der Innenwand der jeweiligen Rohrleitung aus einem weichen Material und die Auskleidung im Flanschbereich aus einem harten Material besteht, daß an der Innenseite der Verdickung der Flanschdichtung eine zweite Ringscheibe angesetzt ist, deren Dicke kleiner ist als die Dicke der armierten Ringscheibe und wobei diese zweite, innere Ringscheibe im Bereich der Auskleidungen aus dem weichen Material liegt, während die armierungsfreie Verdickung sowie die äußere Ringscheibe im Bereich der Auskleidung aus dem harten Material liegen, und daß die zweite, innere Ringscheibe den Dichtspalt der ausgekleideten Rohrleitungen glattwandig abschließt.

Eine nach dieser technischen Lehre ausgebildete Flanschverbindung für Rohrleitungen hat den Vortiel, daß sie auch für kritische Stoffe in der chemischen und artverwandten Industrie geeignet ist, ohne daß Probleme im Bereich der Flanschverbindung auftreten. Die Kombination der erfindungsgemäßen Flanschverbindung mit der speziellen Auskleidung der Rohrleitungen gewährleistet, daß keine Beschädigungen an der Auskleidung auftreten. Die Flanschdichtung besteht dabei aus drei Ringzonen, nämlich aus einer äußeren Ringscheibe, einer mittleren Verdickung (O-Ring) sowie aus einer inneren Ringscheibe, die jeweils unterschiedliche Funktionen haben. So sind für die eigentliche Dichtung die äußere Ringscheibe mit den balligen Oberflächen sowie die mittlere Verdickung (O-Ring) verantwortlich, die die Abdichtung insbesondere gegenüber einer Hartgummiauskleidung der Rohrleitungen übernahmen und für die Übernahme einer hohen Flächenpressung ausgebildet sind. Die innere Ringscheibe stellt dagegen mit ihrer geringeren Dicke kein Dichtteil dar, sondern dient als Erosionsschutz mit geringer Flächenpressung insbesondere gegenüber einer Weichgummiauskleidung der Rohrleitungen. Insbesondere wird durch diese geringe Flächenpressung der inneren Ringscheibe die Gefahr einer Beschädigung mit der Auskleidungsschicht gemindert, da keine schädigende Wirkung durch Scherkräfte ausgeübt wird. Durch den glattwandigen Abschluß des Dichtspaltes werden bei Rohrleitungen mit abrasiven Produkten Wirbelbildungen im Bereich des Ringspaltes vermieden, die ansonsten zu zerstörenden Auswaschungen führen könnten.

In einer ersten Ausführungsform der zweiten Ringscheibe sind deren Oberflächen parallel zueinander ausgebildet, wobei vorzugsweise die zweite Ringscheibe über einen schmalen Steg Mit der Verdickung verbunden sein kann.

In einer zweiten Ausführungsform der zweiten Ringscheibe sind deren Oberflächen jeweils nach innen gewölbt.

In einer bevorzugten dritten Ausführungsform erweitern sich die Oberflächen der zweiten Ringscheibe von der Verdickung ausgehend schwalbenschwanzförmig, so daß eine optimale Dichtzone mit einer minimalen Auswirkung auf die Auskleidung geschaffen wird.

In einer vierten Ausführungsform der zweiten Ringscheibe können deren Oberflächen auch konzentrisch gewellt sein.

In einer bevorzugten Weiterbildung der Flanschverbindung wird vorgeschlagen, daß die Ringscheibe armierungsfrei ist. Auf diese Weise ist die Flanschdichtung flexibel genug, um sich optimal den Kantenbereich der Auskleidung anpassen zu können, ohne diese beispielsweise durch Scherkräfte zu beschädigen.

Nachfolgend wird die Erfindung anhand von in der Zeichnung dargestellten Ausführungsbeispielen erläutert. In der Zeichnung zeigt:

Fig. 1    zwei Flansche einer Rohrleitung mit einer eingebauten, vorgespannten Flanschdichtung im Längsschnitt;

Fig. 2    eine erste Ausführungsform einer unbelasteten Flanschdichtung in vergrößertem Maßstab im Längsschnitt, wobei die Oberflächen der zweiten Ringscheibe parallel zueinander ausgebildet sind;

Fig. 3    eine zweite Ausführungsform einer unbelasteten Flanschdichtung, bei der die Oberflächen der zweiten Ringscheibe jeweils nach innen gewölbt sind;

Fig. 4    eine dritte Ausführungsform einer unbelasteten Flanschdichtung, bei der die Oberflächen der zweiten Ringscheibe schwalbenschwanzförmig ausgebildet sind;

Fig. 5    Eine vierte Ausführungsform einer unbelasteten Flanschdichtung, bei der die Oberflächen der zweiten Ringscheibe konzentrisch gewellt sind.

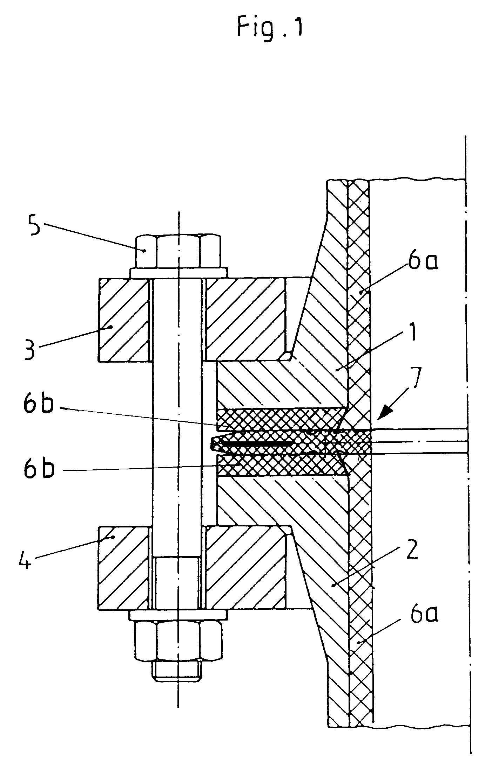

Die in der Fig. 1 dargestellte Flanschverbindung besteht aus Bunden 1 und 2 sowie losen Flanschen 3 und 4, die über eine Schraubverbindung 5 zusammengepreßt werden. Die Bunden 1 und 2 sind an ihren Innenseiten mit einer Auskleidung 6a, 6b versehen, wobei die Auskleidung 6a aus Weichgummi und die Auskleidung 6b im Bereich der Flanschflächen aus Hartgummi besteht. Dabei reicht die Auskleidung 6a aus Weichgummi teilweise um die Flanschkante herum bis in die Flanschringflächen, wie in Fig. 1 zu erkennen ist.

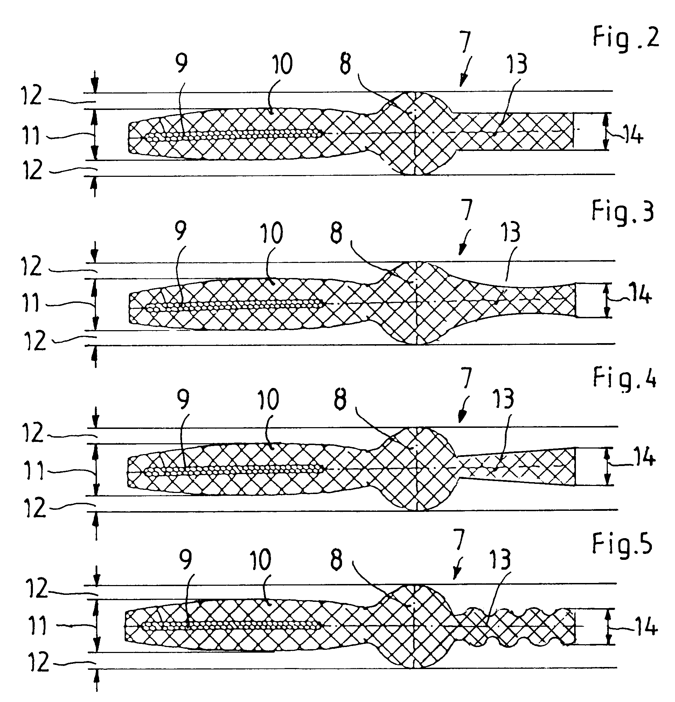

Zwischen den Bunden 1 und 2 ist eine Flanschdichtung 7 angeordnet, die in den Fig. 2 bis 5 in verschiedenen Ausführungsformen im unbelasteten Zustand im vergrößerten Maßstab dargestellt ist. Die Flanschdichtung 7 besteht aus einem O-Ring 8, der keine Armierung aufweist. An der Außenseite des O-Ringes 8 ist eine mit einer Armierung 9 versehene Ringscheibe 10 einteilig angeformt, wobei diese Ringscheibe 10 mit balligen Oberflächen ausgebildet ist. Im Vergleich zur Dicke 11 der Ringscheibe 10 besitzt der O-Ring 8 ein Übermaß 12.

An der Innenseite des O-Ringes 8 ist eine zweite Ringscheibe 13 einteilig angeformt, deren Oberflächen im Gegensatz zur armierten Ringscheibe 10 in der Ausführungsform gemäß Fig. 2 flach ausgebildet sind, wobei die Oberflächen parallel zueinander verlaufen. Die Dicke 14 dieser inneren Ringscheibe 13 entspricht maximal der Dicke 11 der äußeren, armierten Ringscheibe 10. Im dargestellten Ausführungsbeispiel ist die innere Ringscheibe 13 dünner als die äußere Ringscheibe 10.

Bei der in Fig. 3 dargestellten zweiten Ausführungsform der Flanschdichtung 7 sind die Oberflächen der zweiten Ringscheibe 13 jeweils konkav nach innen gewölbt, während bei einer bevorzugten Ausführungsform gemäß Fig. 4 sich die Oberflächen der zweiten Ringscheibe 13 von dem O-Ring 8 ausgehend schwalbenschwanzförmig erweitern. Bei der Ausführungsform gemäß Fig. 5 schließlich sind die einander gegenüberliegenden Oberflächen der zweiten Ringscheibe 13 jeweils konzentrisch zum Mittelpunkt der Flanschdichtung 7 gewellt. Auch bei diesen Ausführungsformen sind die inneren Ringscheiben 13 dünner als die äußeren Ringscheiben 10.

Beim Vorspannen der Flanschdichtung 7 mit der Schraubverbindung 5, wie dies in Fig. 1 dargestellt ist, wird der O-Ring 8 auf die Dicke 11 der äußeren Ringscheibe 10 zusammengedrückt und dabei sowohl zur inneren Ringscheibe 13 hin als auch in die Hohlräume über den ballig ausgebildeten Oberflächen der äußeren Ringscheibe 10 hinein verformt. Für die eigentliche Dichtung ist somit sowohl die äußere Ringscheibe 10 als auch vor allem der O-Ring 8 verantwortlich. Diese beiden Dichtzonen mit hohen Flächenpressungen liegen im Bereich der Hartgummiauskleidung 6b, ohne daß diese beschädigt wird. Die innere Ringscheibe 13 im Bereich der Weichgummiauskleidung 6a beschädigt diese aufgrund der geringen Flächenpressung nicht und dient darüber hinaus als Erosionsschutz.

Zu diesem Zweck schließen auch in dem in Fig. 1 dargestellten Ausführungsbeispiel die Auskleidungen 6a der Bunden 1 und 2 und die innere Ringscheibe 13 der Flanschdichtung 7 den Dichtspalt glattwandig ab.

**Bezugszeichenliste**

| | |
|---|---|
| 1 | Bund |
| 2 | Bund |
| 3 | Flansch |
| 4 | Flansch |
| 5 | Schraubverbindung |
| 6a | Auskleidung (Weichgummi) |
| 6b | Auskleidung (Hartgummi) |
| 7 | Flanschdichtung |
| 8 | O-Ring |
| 9 | Armierung |
| 10 | Ringscheibe |
| 11 | Dicke |
| 12 | Übermaß |
| 13 | Ringscheibe |
| 14 | Dicke |

**Patentansprüche**

1. Flanschverbindung für Rohrleitungen mit einer zwischen den Rohrleitungen angeordneten Flanschdichtung (7) bestehend aus einer armierungsfreien Verdickung, insbesondere einem O-Ring (8), an deren Außenseite eine mit einer Armierung (9) versehene sowie mit balligen Oberflächen ausgebildete Ringscheibe (10) angesetzt ist, wobei die Verdickung im unbelasteten Zustand gegenüber der Dicke (11) der Ringscheibe (10) ein Übermaß (12) besitzt,
**dadurch gekennzeichnet,**
daß die Rohrleitungen jeweils mit einer an sich bekannten Auskleidung (6a,6b) versehen sind, wobei die Auskleidung (6a) im Bereich der Innenwand der jeweiligen Rohrleitung aus einem weichen Material und die Auskleidung (6b) im Flanschbereich aus einem harten Material besteht,
daß an der Innenseite der Verdickung der Flanschdichtung (7) eine zweite Ringscheibe (13) angesetzt ist, deren Dicke (14) kleiner ist als die Dicke (11) der armierten Ringscheibe (10) und wobei diese zweite, innere Ringscheibe (13) im Bereich der Auskleidungen (6a) aus dem weichen Material liegt, während die armierungsfreie Verdickung sowie die äußere Ringscheibe (10) im Bereich der Auskleidung (6b) aus dem harten Material liegen, und
daß die zweite, innere Ringscheibe (13) den Dichtspalt der ausgekleideten Rohrleitungen glattwandig abschließt.

2. Flanschverbindung nach Anspruch 1, dadurch gekennzeichnet, daß die Oberflächen der zweiten Ringscheibe (13) parallel zueinander ausgebildet sind.

3. Flanschverbindung nach Anspruch 2, dadurch gekennzeichnet, daß die zweite Ringscheibe (13) über einen schmalen Steg mit der Verdickung verbunden ist.

4. Flanschverbindung nach Anspruch 1, dadurch gekennzeichnet, daß die Oberflächen der zweiten Ringscheibe (13) jeweils nach innen gewölbt sind.

5. Flanschverbindung nach Anspruch 1, dadurch gekennzeichnet, daß die Oberflächen der zweiten Ringscheibe (13) von der Verdickung ausgehend sich schwalbenschwanzförmig erweitern.

6. Flanschverbindung nach Anspruch 1, dadurch gekennzeichnet, daß die Oberflächen der zweiten Ringscheibe (13) konzentrisch gewellt sind.

7. Flanschverbindung nach einem der Ansprüche 1 bis 6, dadurch gekennzeichnet, daß die zweite Ringscheibe (13) armierungsfrei ist.

**Claims**

1. A flange connection for pipelines, comprising a flange seal (7) disposed between the pipelines and consisting of a thickened portion, more particularly an O-ring (8), free of any reinforcement, to the outside of which there is attached an annular disc (10) provided with a reinforcement (9) and formed with spherical surfaces, the thickened portion having, in the non-loaded condition, an oversize (12) in relation to the thickness (11) of the annular disc (10), characterised in that the pipelines are each provided with a lining (6a, 6b) known per se, the lining (6a) in the region of the inner wall of the associated pipeline consisting of a soft material and the lining (6b) in the flange zone consisting of a hard material,

in that a second annular disc (13) is attached to the inside of the thickened portion of the flange seal (7), the thickness (14) thereof being less than the thickness (11) of the reinforced annular disc (10), and said second inner annular disc (13) being situated in the region of the linings (6a) consisting of the soft material, while the thickened portion free of any reinforcement and the outer annular disc (10) are situated in the region of the lining (6b) consisting of the hard material, and

in that the second inner annular disc (13) provides a flush seal for the gap between the lined pipelines.

2. A flange connection according to claim 1, characterised in that the surfaces of the second annular disc (13) are formed parallel to one another.

3. A flange connection according to claim 2, characterised in that the second annular disc (13) is connected to the thickened portion via a narrow web.

4. A flange connection according to claim 1, characterised in that the surfaces of the second annular disc (13) are each inwardly curved.

5. A flange connection according to claim 1, characterised in that the surfaces of the second annular disc (13) widen out dovetail-fashion starting from the thickened portion.

6. A flange connection according to claim 1, characterised in that the surfaces of the second annular disc (13) are concentrically corrugated.

7. A flange connection according to any one of claims 1 to 6, characterised in that the second annular disc (13) is free of any reinforcement.

**Revendications**

1. Joint à brides pour canalisations comportant un joint à brides (7) disposé entre les canalisations consistant en un épaississement sans armature, notamment un anneau torique (8) à la surface extérieure duquel est appliqué un disque annulaire (10) muni d'une armature (9) et réalisé avec des surfaces convexes, dans lequel l'épaississement présente à l'état non chargé une surépaisseur (12) par rapport à l'épaisseur (11) du disque annulaire (10), caractérisé en ce que les canalisations sont munies à chaque fois d'un revêtement connu en lui même (6a, 6b), le revêtement (6a) au niveau de la paroi intérieure de la canalisation respective consistant en un matériau mou et le revêtement (6b) au niveau du joint en un matériau dur, en ce qu'il est appliqué contre le côté interne de l'épaississement du joint à brides (7) un deuxième disque annulaire (13), dont l'épaisseur (14) est plus faible que l'épaisseur (11) du disque annulaire (10) armé, ce deuxième disque annulaire (13) intérieur étant disposé au niveau des épaississements (6a) hors du matériau mou, tandis que l'épaississement sans armature ainsi que le disque annulaire (10) extérieur sont disposés au niveau du revêtement (6b) hors du matériau dur et en ce que le deuxième disque annulaire (13) intérieur isole comme une paroi lisse la fente du joint des canalisations revêtues.

2. Joint à brides selon la revendication 1, caractérisé en ce que les surfaces du deuxième disque annulaire (13) sont disposées parallèlement l'une à l'autre.

3. Joint à brides selon la revendication 2, caractérisé en ce que le deuxième disque annulaire (13) est relié à l'épaississement par une traverse étroite.

4. Joint à brides selon la revendication 1, caractérisé en ce que les surfaces du deuxième disque annulaire (13) sont courbées chacune vers l'intérieur.

5. Joint à brides selon la revendication 1, caractérisé en ce que les surfaces du deuxième disque annulaire (13) s'éloignent à partir de l'épaississement en forme de queue d'aronde.

6. Joint à brides selon la revendication 1, caractérisé en ce que les surfaces du deuxième disque annulaire (13) sont ondulées de façon concentrique.

7. Joint à brides selon l'une des revendications 1 à 6, caractérisé en ce que le deuxième disque annulaire (13) est sans armature.

Fig.1

Fig .2

Fig.3

Fig.4

Fig.5